# EUROPEAN PATENT SPECIFICATION

(11) **EP 2 313 315 B1**
(45) Date of publication and mention of the grant of the patent: **17.02.2016**
(21) Application number: 09784896.4
(22) Date of filing: 07.08.2009
(51) Int. Cl.: B64D 11/06

(54) **ARRAY OF AIRCRAFT SEATS**
FLUGZEUGSITZANORDNUNG
ARRANGEMENT DE SIEGES D'AVION

(30) Priority: 14.08.2008 US 188960 P; 12.09.2008 GB 0816742
(43) Date of publication of application: 27.04.2011
(73) Proprietor: American Airlines, Inc., Fort Worth TX 76155 (US)
(72) Inventor: ERSAN, Ali, London E2 0QA (GB)
(74) Representative: Brooks, Nigel Samuel
(86) International application number: PCT/GB2009/001950
(87) International publication number: WO 2010/018367

(56) References cited:
- EP-A1- 1 364 874
- WO-A1-03/013903
- WO-A2-00/21831
- WO-A2-2007/024776
- DE-A1-102006 056 898

## Description

The present invention relates to an array of aircraft seats.

Aircraft passenger seats are arrayed in an aircraft cabin in accordance with a Layout Of Passenger Accommodation, known in the art as a LOPA. A LOPA generally refers to the layout for an entire aircraft and incudes not only seating, but also galleys and lavatories. The present invention relates to an array primarily, but not exclusively, for sleeper seats; that is seats that are convertible from sitting mode to sleeping mode. Such seats usually comprise a proportion only of the total seating in a cabin. Accordingly in this specification, the term "array of aircraft seats" of aircraft seats is used to denote arrangement of a proportion, or indeed possibly the totality, of the seats in an overall LOPA.

An example of a LOPA is shown in WO 2007/024776 Plant (the text quoted being the published abstract), which describes:
"A passenger seating arrangement includes a first seat unit, facing in a first direction; a first ottoman having a first support surface positioned to received the feet of a passenger seated in the first seat unit; a second seat unit facing in a second direction generally opposite to the first direction; and a second ottoman disposed laterally adjacent to the first ottoman and having a second support surface positioned to receive the feet of a passenger seated in the second seat unit."

In design of a LOPA, a major consideration is efficient utilisation of the cabin, that is maximising the number of seats or at least maximising revenue from the seats, bearing in mind that sleeper seats command a substantial premium with respect to economy seats.

The object of the present invention is to provide an improved array of aircraft seats.

According to the invention there is provided an array of aircraft seats, the seats being convertible between a sitting mode and a sleeping mode, the array of seats comprising:
- seats arranged for array in two columns along and in rows across an aircraft cabin, the columns being on respective sides of a longitudinal axis of the array:
- the seats having respective central axes,
- the seats in both columns having their central axes angled with respect to, as opposed to parallel to, the longitudinal axis,
wherein:
- each column has only one seat in each row,
- the array including at least one sextet of the seats having:
   - three seats from one column and three rows on one side of the longitudinal axis, with
      - a middle one of these three seats facing inwards towards or outwards from the longitudinal axis and
      - the other of these three seats facing outwards from or inwards towards the longitudinal axis respectively and
   - three seats from the other column and the three rows on the other side of the longitudinal axis, with
      - a middle one of these three seats facing inwards towards the longitudinal axis and
      - the other of these three seats facing outwards from the longitudinal axis,
- the seats in the or each sextet of seats are arranged in pairs of adjacent seats:
   - each pair of adjacent seats having one seat from one column on one side of the longitudinal axis and the other seat from the other column on the other side of the longitudinal axis,
   - the pairs of seats facing in opposite directions along the longitudinal axis:
      - the seats of one pair facing inwards towards the longitudinal axis and
      - the seats of the next pair along the longitudinal axis facing outwards from the longitudinal axis,
   - the pairs of seats are separated by a longitudinal divider along the longitudinal axis.

Whilst it can be envisaged that the seats in the two columns may all be set parallel with each other, in the preferred embodiment, the seats are set in a chevron array.

In the case of a chevron array, the angle of the seats, i.e. the angle between the longitudinal axis and the central axes of the seats is referred to as the "herringbone" angle of the array. The direction across the seats, as at the junction of a back rest and a seat cushion or seat pan, is referred to as a "complementary herringbone" angle, i.e. the third angle of a right angle triangle having the herringbone angle as the second angle.

Again, it can be envisaged that the seats are staggered, whereby corresponding seats in one column are longitudinally, displaced with respect to each other. However it is preferred that they are arrayed to have equidistant longitudinal positions in the two columns.

The pairs of seats are separated - in sleeping mode - only by a longitudinal divider along the longitudinal axis. In the referred embodiment, the inwards facing pairs of seats have respective ottomans on either side of the divider, the ottomans being triangular, one side extending along the divider, a second side extending at substantially the complementary herringbone angle across the end of a leg rest of the seat in sleeping mode and the third side extending away from the divider. The inner corner of the leg rests substantially abut the longitudinal divider. Similarly the inner corner of the head rests (in sleeping mode) of the outwards facing seats substantially abuts the longitudinal divider.

Additionally to the longitudinal divider, the individual seats in the columns have inter-seat dividers between them. Whilst these can deviate from being at right angles from the longitudinal divider, where they meet the latter, particularly towards the complementary herringbone angle where they cross behind head rests at the longitudinal divider and away from the complementary angle where they cross in behind a ottoman at the longitudinal divider (in both cases behind being used in the context of relative position from the perspective of a user of the seat); preferably the inter-seat dividers extend substantially at right angles to the longitudinal divider.

At aisles opposite the seats from the longitudinal divider, the inter-seat dividers can end or be continued along the aisle. Where they cross behind head rests of inwards facing seats, they can be angled towards the complementary herringbone angle, but are preferably substantially at right angles to the longitudinal divider. Further, at the aisle, they preferably continue along the aisle. Where the inter-seat dividers extend behind ottomans, they are preferably angled away from the complementary angle. Such angling allows the ottoman to be of appreciable size, without impinging on the access space.

Preferably, the array includes on opposite sides of the aisles, two side columns of angled, alternate-facing seats set against cabin side walls, one side column on one side of the two columns along the longitudinal axis and the other on the other side. Preferably the seats and inter-seat dividers are arranged in the side columns in like manner to the seats and inter-seat dividers in the central columns. Whilst the seats on opposite sides of the aisles can be parallel to each other, they are preferably in chevron array, albeit a staggered chevron.

To help understanding of the invention, a specific embodiment thereof will now be described by way of example and with reference to the accompanying drawings, in which:
Figure 1 is a plan view of a short array of six sleeper seats arrayed in accordance with the invention:
Figure 2 is a LOPA view of the seats of Figure 1 in an aircraft cabin;
Figure 3 is an equivalent LOPA to that of Figure 2 showing a cabin equipped with conventional seats;
Figure 4 is a LOPA view of the seats of Figure 1 in another aircraft cabin;
Figure 5 is an equivalent LOPA to that of Figure 4 showing a cabin equipped with conventional seats;
Figure 6 is a view similar to Figure 1 of an alternative array in accordance with the invention; and
Figure 7 is a further view similar to Figure 1 of another array of seats which is not claimed.

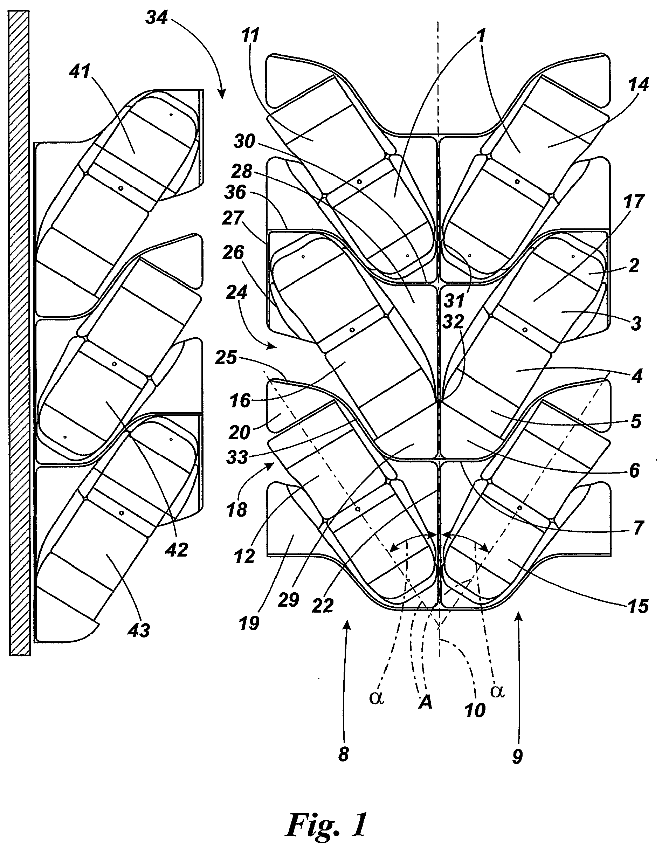

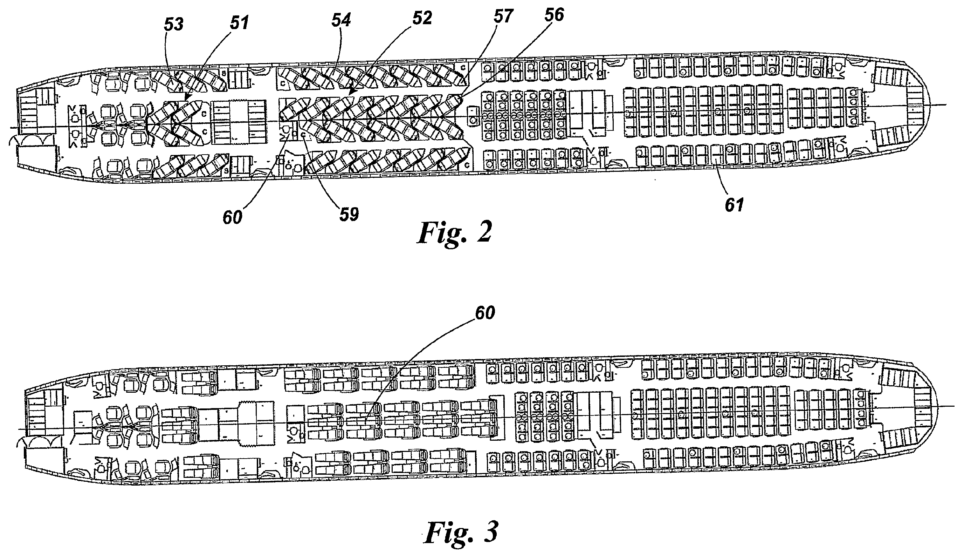

Referring to Figures 1 & 2, the sleeper seats 1 are shown there in sleeping mode. Each comprises a head rest 2, a back rest 3, a seat pan or seat cushion 4 and a leg rest 5, all of which move in a conventional manner when the seat is moved from sleeping mode to sitting mode. The seats also include ottomans 6. Further they have inter-seat dividers 7 between the individual seats within the their column. The six seats shown in Figure 1 - at the right of the Figure - are arranged in a chevron formation or array and two column 8, 9. All the seats in each column are parallel with each other and have central axes A set at a "herringbone" angle a to the column direction and in particular to a longitudinal axis 10 of the array. This angle is measured anti-clockwise from the longitudinal axis for the seats in column 8 and clockwise for the seats in column 9.

However, whist being angled at the same herringbone angle, alternate seats face in alternate directions. Thus seats 11, 12, 14. 15 face outwards, whilst intervening seats 16, 17 face inwards. Please note the terms "outwards" and "inwards" are used in respect of the direction out from and in towards the longitudinal axis A, which will generally be along the centre of the aircraft cabin in which the seats will be arrayed when installed.

It should be noted that seats 11, 14, 16, 17 are arrayed as a quartet of the seats having:
- two seats 11, 16 from one column 8 on one side of the longitudinal axis 10. with
   - one 16 of these two seats facing inwards towards the longitudinal axis and
   - the other 11 of these two seats facing outwards from the longitudinal axis and
- two seats 14, 17 from the other column 9 on the other side of the longitudinal axis 10, with
   - one 17 of these two seats facing inwards towards the longitudinal axis and
   - the other 14 of these two seats facing outwards from the longitudinal axis.

The seats 16, 17, 12, 15 are similarly arrayed.

Whilst it can be appreciated that when the seats are moved from sleeping mode as shown to sitting mode, access to the outwards facing seats is readily available via their passage spaces 18 between their side furniture 19 and their triangular ottomans 20. Inter-seat dividers 7 give the individual seats privacy. At the head end of each of these seats, a longitudinal divider 22 on the longitudinal axis 10 extends between the inter-seat dividers and indeed along the axis. The inter-seat dividers extend away from the longitudinal dividers at right angles.

The inwards facing seats have an access passage 24, between the foot end 25 of a divider from an adjacent seat and side furniture 26 of the seat in question. An extension 27 of this seat's divider extends around an aisle side of the seat head rest. Opposite the seat, against the longitudinal divider is a side furniture shelf 28. At the foot of the bed is its ottoman 29. This is triangular, with one side against the longitudinal divider, one against the inter-seat divider 30 and a third at the complementary herringbone angle (defined above). The herringbone angle a of the array in Figure 1 is 33°.

It should be noted that the seats on either side of the longitudinal divider come close to each other - being in effect separated by it only at the inboard corners 31 of the head rests of the outwards facing seats and the inboard corners 32 of the leg rests of the inwards facing seats, these corners being slightly rounded. Also at intermediate portions 33 of the inter-seat dividers, these extend at the herringbone angle, before turning more directly towards the aisles 34. Those inter-seat divider portions 25 passing along the ottomans 20 of the outwards facing seats do not turn fully perpendicular again to the longitudinal dividers, so as not to restrict the size of these ottomans, whilst portions 36 at the head rest ends of the inwards facing seats do turn perpendicular to meet their extensions 27.

On the other side of the aisles 33 are a single column of seats 41,42,43, also in herringbone, alternately facing array. These seats are to all intents and purposes the same as the seats of the two central columns, save only that their herringbone angle is very slightly different at 32°. It should be noted that they are in chevron array with respect to the central seats also fronting the aisle.

Turning to Figure 2, there is shown two arrays 51,52 in accordance with the invention in a three class/fare aircraft cabin. Corresponding cabin wall seats 53, 54 are provided. It will be noted that:
- the chevrons of the arrays 51,52 point forwards in the cabin;
- there are different numbers of seats in the array 51 from the side wall seats 53, at least as regards those fronting the same aisle;
- the array 52 has one seat missing and its place taken by a lavatory 58 and a cupboard 59.

It can be noted that the array of Figure 1 has advantages, which can be appreciated from Figure 2 by comparison with Figure 3. The latter shows an equivalent business class passenger count LOPΔ using conventional business class seats 22, in which LOPA it is necessary for the business class seats to be arrayed three abreast along the centre of the cabin. This requires central passengers to step over their neighbours for aisle access, as is required for window seat passengers seated against the side wall of the cabin. By contrast, the seats arrayed in accordance with the invention all have direct aisle access. Further, it will be noted that the array in accordance with the invention allows an increase by twelve in the number of economy class seats 23.

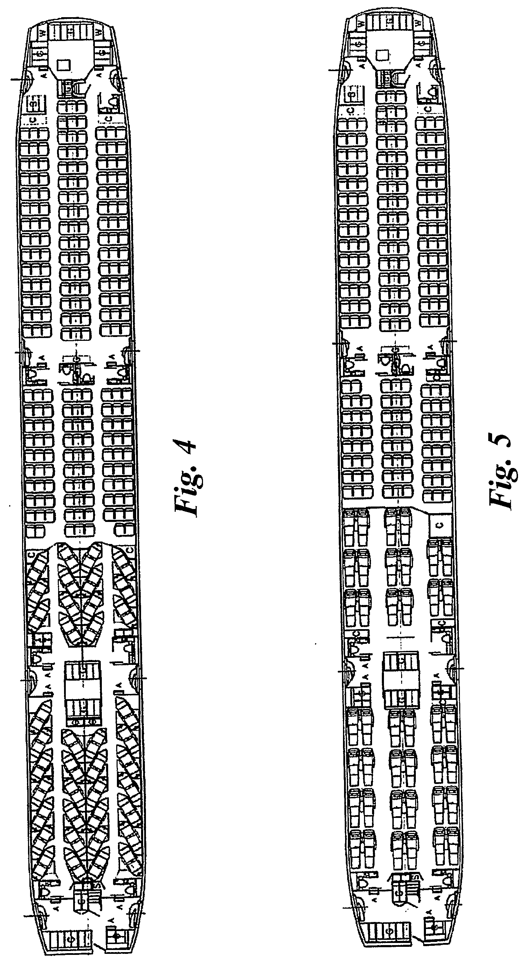

Turning on to Figures 4 & 5, two similar cabins of a two class/fare aircraft are shown. Again, the array of the invention shows advantages in providing for the same number of business class passengers, but an additional seventeen economy class passengers.

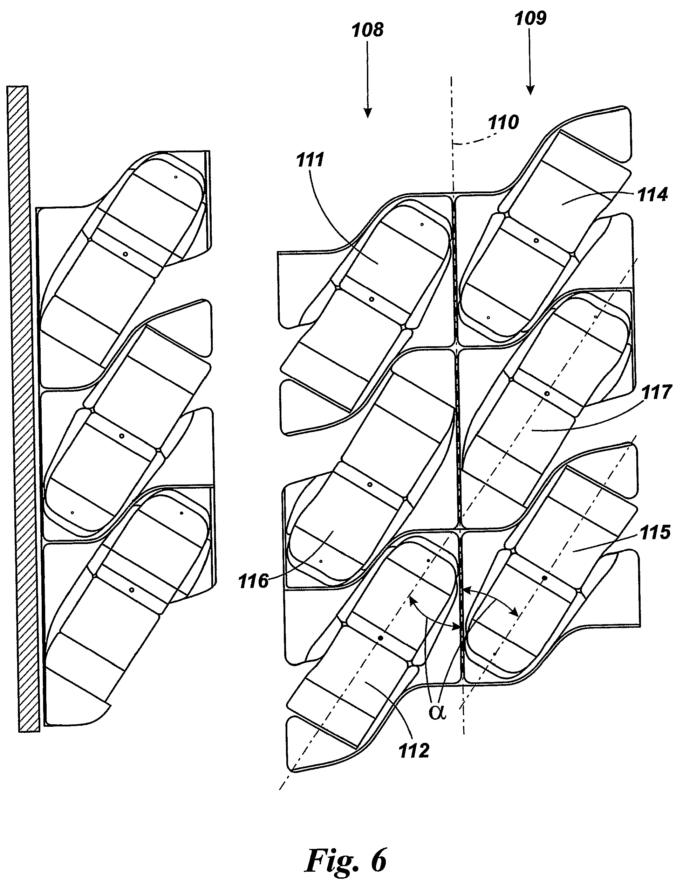

Turning on to Figure 6, an alternative array of the seats in accordance with the invention is shown. It is substantially identical to the array of Figure 1, except that the seats of column 108 are a mirror image of the seats of column 8. Thus all the seats have their axes A parallel to each other and set at the same angle α with respect to the longitudinal axis and measured in the same, i.e. clockwise, direction for all the seats in both columns. Further the seats are arranged in pairs facing either inwards or outwards. Thus pairs of seats 111, 112 & 114, 115 face outwards, whilst intervening seats 116, 117 face inwards. And again, the seats 111, 114, 116, 117 are arrayed as a quartet of the seats having:
- two seats 111, 116 from one column 108 on one side of the longitudinal axis 110, with
   - one 116 of these two seats facing inwards towards the longitudinal axis and
   - the other 111 of these two seats facing outwards from the longitudinal axis and
- two seats 114, 117 from the other column 109 on the other side of the longitudinal axis 10. with
   - one 117 of these two seats facing inwards towards the longitudinal axis and the other 114 of these two seats facing outwards from the longitudinal axis.

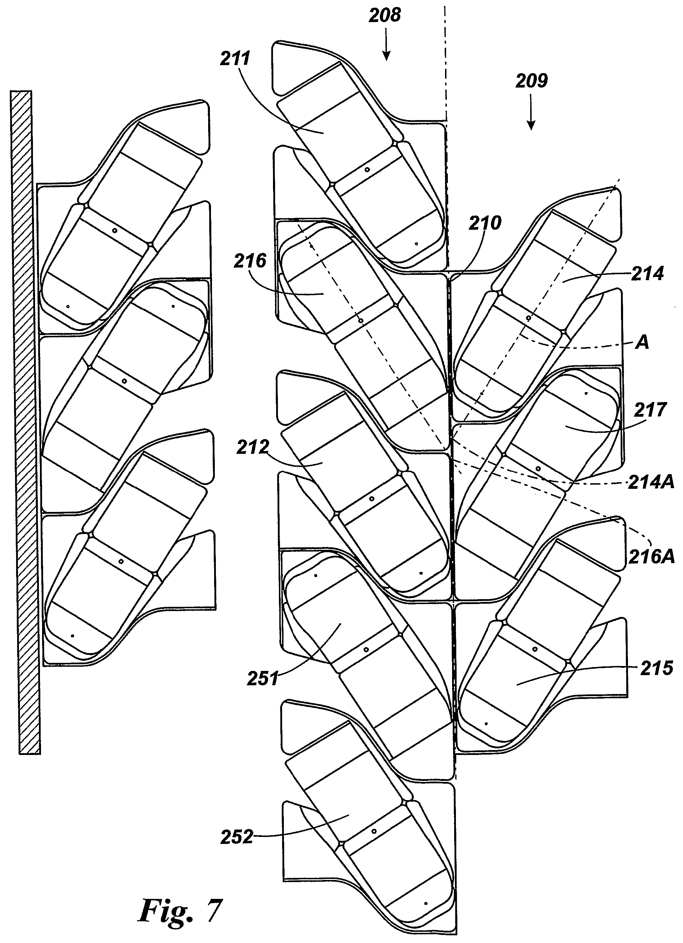

Turning on again to Figure 7, another array of seats which is not according to the invention.

Five seats 211,216,212,251,252 are shown in column 208 and three seats 214,217,215 arc shown in column 209. The array is substantially identical to the array of Figure 1, except that the seats of column 208 are translated with respect to the seats of column 8. Thus all the seats alternate in their columns as to the direction in which they face and they are in a staggered chevron array. If the extent of translation were less, they would be are arranged in pairs facing either inwards or outwards. However as shown in Figure 7 outwards facing seat 211 is no longer paired with outwards facing seat 214. Rather, inwards facing seat 216 is paired with outwards facing seat 214; and so on along the array. However, again, the seats 216,212,214,217 are arrayed as a quartet of the seats having:
- two seats 216,212 from one column 208 on one side of the longitudinal axis 210, with
   - one 216 of these two seats facing inwards towards the longitudinal axis and
   - the other 212 of these two seats facing outwards from the longitudinal axis and
- two seats 214,217 from the other column 209 on the other side of the longitudinal axis 210, with
   - one 217 of these two seats facing inwards towards the longitudinal axis and
   - the other 214 of these two seats facing outwards from the longitudinal axis.

It will be noted that the central axes A of the seats 214,216 intersect the longitudinal axis 210 at different points 214A,216A.

## Claims

1. An array of aircraft seats, the seats being convertible between a sitting mode and a sleeping mode, the array of seats comprising:
• seats arranged for array in two columns along and in rows across an aircraft cabin, the columns being on respective sides of a longitudinal axis of the array:
• the seats having respective central axes,
• the seats in both columns having their central axes angled with respect to, as opposed to parallel to, the longitudinal axis,
wherein:
• each column has only one seat in each row,
• the array including at least one sextet of the seats having:
• three seats from one column and three rows on one side of the longitudinal axis, with
• a middle one of these three seats facing inwards towards or outwards from the longitudinal axis and
• the other of these three seats facing outwards from or inwards towards the longitudinal axis respectively and
• three seats from the other column and the three rows on the other side of the longitudinal axis, with
• a middle one of these three seats facing inwards towards the longitudinal axis and
• the other of these three seats facing outwards from the longitudinal axis,
• the seats in the or each sextet of seats are arranged in pairs of adjacent seats:
• each pair of adjacent seats having one seat from one column on one side of the longitudinal axis and the other seat from the other column on the other side of the longitudinal axis,
• the pairs of seats facing in opposite directions along the longitudinal axis:
• the seats of one pair facing inwards towards the longitudinal axis and
• the seats of the next pair along the longitudinal axis facing outwards from the longitudinal axis,
• the pairs of seats are separated by a longitudinal divider along the longitudinal axis.

2. An array of aircraft seats as claimed in claim 1, wherein all the seats are arranged with their central axes at substantially the same angle with respect to the longitudinal axis.

3. An array of aircraft seats as claimed in claim 2. wherein the seats in one column are arranged substantially parallel with the seats in the other column, that is with the central axes of all the seats in both column making with the longitudinal axis substantially the same angle measured in the clockwise (or anti-clockwise) direction.

4. An array of aircraft seats as claimed in claim 2, wherein the seats arranged in a chevron array, that is with the seats in one column angled with respect to the seats in the other column, and with the central axes of all the seats in one column making with the longitudinal axis substantially the same angle measured in the clockwise (or anti-clockwise) direction as the central axes of all the seats in the other column make with the longitudinal axis measured in the anti-clockwise (or clockwise) direction.

5. An array of aircraft seats as claimed in any preceding claim, wherein the seats are staggered along the longitudinal axis, whereby the seats in the pairs are displaced along the longitudinal axis with respect to each other with their central axes intersecting the longitudinal axis at different positions.

6. An array of aircraft seats as claimed in any one of claims 1 to 4. wherein the seats are equivalently positioned along the longitudinal axis, whereby the central axes of the seats in the pairs intersect the longitudinal axis at substantially the same positions.

7. An array of aircraft seats as claimed in any preceding claim, wherein the seats are sleeper seats.

8. An array of aircraft seats as claimed in claim 7, wherein the seats of the pairs facing inwards towards the longitudinal axis have respective ottomans on respective sides of the divider,
• each ottoman being triangular,
• one side of the ottoman extending along the divider,
• a second side of the ottoman extending transversely of the central axis of the respective seat across an end of a leg rest of the seat in sleeping mode and
• a third side of the ottoman extending away from the divider.

9. An array of aircraft seats as claimed in claim 8, wherein an inner corner of the leg rest of each inwards facing seat in sleeping mode substantially abuts the longitudinal divider.

10. An array of aircraft seats as claimed in claim 8, wherein an inner corner of a head rest of each outwards facing seat in sleeping mode substantially abuts the longitudinal divider.

11. An array of aircraft seats as claimed in any preceding claim, including inter-seat dividers between the individual seats within each column.

12. An array of aircraft seats as claimed in claim 11, wherein at the longitudinal divider, the inter-seat dividers have inner portions extending substantially at right angles to the longitudinal divider.

13. An array of aircraft seats as claimed in claim 12, wherein the inter-seat dividers have intermediate portions extending substantially parallel to the central axes of the two seats which they divide.

14. An array of aircraft seats as claimed in claim 13, wherein the inter-seat dividers have outer portions, either extending substantially at right angles to the longitudinal divider, where the respective outer portion extends behind a head rest end of a seat, or extending at an angle intermediate right angles to the longitudinal divider and the central axis of the seat, where the respective outer portion extends behind an ottoman end of a seat.

15. An array of aircraft seats as claimed in claim 13, wherein the inter-seat dividers have aisle extensions at least from their outer portions extending behind a head rest end of a seat, to at least partially enclose the head rest end.

16. An array of aircraft seats as claimed in any preceding claim, including at least one further column of seats spaced by an aisle from the neighbouring one of the two columns of seats:
• the seats of the further column having respective central axes,
• the seats in the further column having their central axes angled with respect to the longitudinal axis and
• the seats in the further column facing in opposite directions along the longitudinal axis, one facing towards the longitudinal axis and the next facing away from the longitudinal axis.

## Patentansprüche

1. Anordnung von Flugzeugsitzen, wobei die Sitze zwischen einer Sitzstellung und einer Schlafstellung verstellbar sind, wobei die Sitzanordnung aufweist:
• Sitze, die in einer Anordnung von zwei Längsreihen und von Querreihen in einer Flugzeugkabine gegliedert sind, wobei sich die Längsreihen beidseits einer Längsachse der Anordnung befinden:
• wobei die Sitze jeweils zentrale Achsen aufweisen
• wobei die zentralen Achsen der Sitze in beiden Längsreihen relativ zu der Längsachse unter einem Winkel verlaufen, ohne parallel zur Längsachse zu sein
wobei:
• jede Längsreihe nur einen Sitz in jeder Querreihe hat
• die Anordnung mindestens ein Sextett von Sitzen aufweist, mit:
• drei Sitzen einer Längsreihe und drei Querreihen an einer Seite der Längsachse, mit
• einem mittleren dieser drei Sitze mit einer Ausrichtung nach innen in Richtung auf die oder nach außen in Richtung von der Längsachse, und
• den beiden anderen dieser drei Sitze mit einer Ausrichtung nach außen in Richtung von der bzw. nach innen in Richtung auf die Längsachse, und
• drei Sitzen der anderen Längsreihe und den drei Querreihen auf der anderen Seite der Längsachse, mit
• einem mittleren dieser drei Sitze mit einer Ausrichtung nach innen in Richtung auf die Längsachse, und
• den beiden anderen dieser drei Sitze mit einer Ausrichtung nach außen in Richtung von der Längsachse,
• wobei die Sitze in dem oder jedem Sextett der Sitze paarweise benachbart angeordnet sind:
• jedes Paar von benachbarten Sitzen einen Sitz in einer der beiden Längsreihen seitlich der Längsachse und einen anderen Sitz in der anderen Spalte der beiden Längsreihen auf der anderen Seite der Längsachse umfasst
• die Sitzpaare in entgegengesetzte Richtungen längs der Längsachse ausgerichtet sind:
• die Sitze eines Paares nach innen in Richtung auf die Längsachse ausgerichtet sind, und
• die Sitze des nächsten Paares entlang der Längsachse nach außen von der Längsachse ausgerichtet sind,
• wobei die paarweise angeordneten Sitze voneinander mittels eines entlang der Längsachse angeordneten Längstrennelements separiert sind.

2. Anordnung von Flugzeugsitzen nach Anspruch 1, **dadurch gekennzeichnet, dass** alle Sitze mit ihren zentralen Achsen im Wesentlichen unter demselben Winkel relativ zur Längsachse angeordnet sind.

3. Anordnung von Flugzeugsitzen nach Anspruch 2, **dadurch gekennzeichnet, dass** die Sitze in einer Längsreihe im Wesentlichen parallel zu den Sitzen in der anderen Längsreihe angeordnet sind, d.h. mit den zentralen Achsen aller Sitze in beiden Längsreihen unter im Wesentlichen demselben Winkel zur Längsachse gemessen im Uhrzeigersinn (oder gegen den Uhrzeigersinn).

4. Anordnung von Flugzeugensitzen nach Anspruch 2, **dadurch gekennzeichnet, dass** die Sitze in einer Pfeilformation angeordnet sind, wobei die Sitze in einer Längsreihe unter einem Winkel zu den Sitzen in der anderen Längsreihe ausgerichtet sind, und wobei die zentralen Achsen aller Sitze in einer Längsreihe mit der Längsachse im Wesentlichen den gleichen Winkel gemessen im Uhrzeigersinn (oder gegen den Uhrzeigersinn) einschließen wie die zentralen Achsen aller Sitze in der anderen Längsreihe mit der Längsachse entgegen dem Uhrzeigersinn (respektive im Uhrzeigersinn) gesehen.

5. Anordnung von Flugzeugensitzen nach einem der vorstehenden Ansprüche, **dadurch gekennzeichnet, dass** die Sitze entlang der Längsachse versetzt angeordnet sind, wodurch die Sitze in den Paaren längs der Längsachse zueinander verschoben ist, so dass ihre zentralen Achsen die Längsachse an verschiedenen Positionen schneiden.

6. Anordnung von Flugzeugensitzen nach einem der Ansprüche 1 bis 4, **dadurch gekennzeichnet, dass** die Sitze längs der Längsachse gleichmäßig positioniert sind, so dass sich die zentralen Achsen hier paarweise angeordneten Sitze die Längsachse an im wesentlichen gleichen Positionen schneiden.

7. Anordnung von Flugzeugensitzen nach einem der vorstehenden Ansprüche, **dadurch gekennzeichnet, dass** die Sitze Schlafsitze sind.

8. Anordnung von Flugzeugensitzen nach Anspruch 7, **dadurch gekennzeichnet, dass** die Sitze in der nach innen der Längsachse zugewandten Paare jeweils Polster an jeweiligen Seiten des Trennelements aufweisen, wobei
• jedes Polster dreieckig ist,
• eine Seite des Polsters sich entlang des Trennelements erstreckt,
• eine zweite Seite des Polsters sich quer zu der zentralen Achse des jeweiligen Sitzes über ein Ende einer Beinablage des Sitzes in der Schlafposition erstreckt, und
• eine dritte Seite des Polsters sich vom Trennelement weg erstreckt.

9. Anordnung von Flugzeugensitzen nach Anspruch 8, **dadurch gekennzeichnet, dass** eine innere Ecke der Beinablage eines jeden nach innen gerichteten Sitzes in der Schlafposition im Wesentlichen an dem Längstrennelement anstößt.

10. Anordnung von Flugzeugensitzen nach Anspruch 8, **dadurch gekennzeichnet, dass** eine innere Ecke einer Kopfablage eines jeden nach außen gerichteten Sitzes in der Schlafposition im Wesentlichen an dem Längstrennelement anstößt.

11. Anordnung von Flugzeugensitzen nach einem der vorstehenden Ansprüche, **gekennzeichnet durch** Zwischen-Sitz-Trennelemente zwischen den einzelnen Sitzen innerhalb jeder Längsreihe.

12. Anordnung von Flugzeugensitzen nach Anspruch 11, **dadurch gekennzeichnet, dass** die Zwischen-Sitz-Trennelemente an dem Längstrennelement Innenteile haben, die sich im Wesentlichen rechtwinklig zu dem Längstrennelement erstrecken.

13. Anordnung von Flugzeugensitzen nach Anspruch 12, **dadurch gekennzeichnet, dass** die Zwischen-Sitz-Trennelemente Mittelteile haben, die sich im Wesentlichen parallel zu den zentralen Achsen der beiden Sitze erstrecken, die sie voneinander abteilen.

14. Anordnung von Flugzeugensitzen nach Anspruch 12, **dadurch gekennzeichnet, dass** die Zwischen-Sitz-Trennelemente Außenteile aufweisen, die sich entweder im Wesentlichen rechtwinklig zu dem Längstrennelement erstrecken, wenn sich das entsprechende Außenteil hinter einem Kopfablageende eines Sitzes erstreckt, oder in einem Winkel zwischen einem rechten Winkel zum Längstrennelement und der zentralen Achse des Sitzes erstrecken, wenn sich das jeweilige Außenteil hinter einem Polsterende des Sitzes erstreckt.

15. Anordnung von Flugzeugensitzen nach Anspruch 13, **dadurch gekennzeichnet, dass** die Zwischen-Sitz-Trennelemente zumindest an den sich hinter einem Kopfablageende eines Sitzes erstreckenden Außenteilen Gang-Verlängerungen aufweisen, um das Kopfablageende wenigstens teilweise einzufassen.

16. Anordnung von Flugzeugensitzen nach einem der vorstehenden Ansprüche, **gekennzeichnet durch** wenigstens eine weitere Längsreihe Sitze, die **durch** einen Zwischengang von der benachbarten der zwei Längsreihen Sitze beabstandet ist, wobei:
• die Sitze der weiteren Längsreihe entsprechende zentrale Achsen haben,
• die zentralen Achsen der Sitze in der weiteren Längsreihe unter einem Winkel zu der Längsachse ausgerichtet sind, und
• die Sitze in der weiteren Längsreihe in entgegengesetzte Richtungen längs der Längsrichtung ausgerichtet sind, wobei eier der Längsachse zugewandt und der nächste von der Längsachse abgewandt ist.

## Revendications

1. Un arrangement de sièges d'avion, les sièges étant convertibles entre un mode assis et un mode allongé, l'arrangement de sièges comprenant :
• des sièges disposés pour un arrangement en deux colonnes longitudinalement et en rangées transversalement à une cabine d'avion, les colonnes se trouvant sur des côtés respectifs d'un axe longitudinal de l'arrangement ;
• les sièges possédant des axes centraux respectifs,
• les sièges des deux colonnes ayant leur axe central disposé de manière angulaire, et non parallèle, à l'axe longitudinal,
dans lequel :
• chaque colonne possède seulement un siège dans chaque rangée,
• l'arrangement comprenant au moins un sextet des sièges possédant :
• trois sièges d'une colonne et de trois rangées d'un côté de l'axe longitudinal, avec
• un siège du milieu de ces trois sièges étant tourné vers l'intérieur en direction de l'axe longitudinal ou vers l'extérieur à l'opposé de l'axe longitudinal et
• les autres de ces trois sièges étant tournés vers l'extérieur à l'opposé de l'axe longitudinal ou, respectivement, vers l'intérieur en direction de celui-ci et
• trois sièges de l'autre colonne et des trois rangées de l'autre côté de l'axe longitudinal, avec
• un siège du milieu de ces trois sièges tourné vers l'intérieur en direction de l'axe longitudinal et
• les autres de ces trois sièges tournés vers l'extérieur à l'opposé de l'axe longitudinal,
• les sièges dans le ou chaque sextet de sièges sont arrangés par paires de sièges adjacents :
• chaque paire de sièges adjacents possédant un siège d'une colonne d'un côté de l'axe longitudinal et l'autre siège de l'autre colonne de l'autre côté de l'axe longitudinal,
• les paires de sièges étant tournées dans des directions opposées selon l'axe longitudinal :
• les sièges d'une paire étant tournés vers l'intérieur en direction de l'axe longitudinal et
• les sièges de la paire suivante selon l'axe longitudinal étant tournés vers l'extérieur à l'opposé de l'axe longitudinal,
• les paires de sièges sont séparées par une cloison longitudinale selon l'axe longitudinal.

2. Un arrangement de sièges d'avion conforme à la revendication 1, dans lequel tous les sièges sont disposés avec leur axe central à sensiblement le même angle par rapport à l'axe longitudinal.

3. Un arrangement de sièges d'avion conforme à la revendication 2, dans lequel les sièges d'une colonne sont disposés sensiblement parallèlement aux sièges de l'autre colonne, c'est-à-dire que les axes centraux de tous les sièges des deux colonnes forment avec l'axe longitudinal sensiblement le même angle mesuré dans le sens horaire (ou antihoraire).

4. Un arrangement de sièges d'avion conforme à la revendication 2, dans lequel les sièges sont disposés dans un arrangement en chevrons, c'est-à-dire que les sièges d'une colonne sont disposés en angle par rapport aux sièges de l'autre colonne, et que les axes centraux de tous les sièges d'une colonne forment avec l'axe longitudinal sensiblement le même angle, mesuré dans le sens horaire (ou antihoraire), que celui formé par les axes centraux de tous les sièges de l'autre colonne avec l'axe longitudinal mesuré dans le sens antihoraire (ou horaire).

5. Un arrangement de sièges d'avion conforme à l'une quelconque des revendications précédentes, dans lequel les sièges sont disposés en quinconce selon l'axe longitudinal, les sièges des paires étant décalés selon l'axe longitudinal l'un par rapport à l'autre, leurs axes centraux coupant l'axe longitudinal en des points différents.

6. Un arrangement de sièges d'avion conforme à l'une quelconque des revendications 1 à 4, dans lequel les sièges sont positionnés de manière équivalente selon l'axe longitudinal, les axes centraux des sièges des paires coupant l'axe longitudinal en sensiblement les mêmes points.

7. Un arrangement de sièges d'avion conforme à l'une quelconque des revendications précédentes, dans lequel les sièges sont des sièges couchettes.

8. Un arrangement de sièges d'avion conforme à la revendication 7, dans lequel les sièges des paires tournées vers l'intérieur en direction de l'axe longitudinal possèdent des repose-pieds sur des côtés respectifs de la cloison,
• chaque repose-pieds étant triangulaire,
• un côté du repose-pieds s'étendant le long de la cloison,
• un second côté du repose-pieds s'étendant transversalement à l'axe central du siège respectif en longeant une extrémité d'un repose-jambes du siège en mode allongé et
• un troisième côté du repose-pieds s'éloignant de la cloison.

9. Un arrangement de sièges d'avion conforme à la revendication 8, dans lequel, en mode allongé, un coin intérieur du repose-jambes de chaque siège tourné vers l'intérieur est sensiblement en butée contre la cloison longitudinale.

10. Un arrangement de sièges d'avion conforme à la revendication 8, dans lequel, en mode allongé, un coin intérieur d'un appuie-tête de chaque siège tourné vers l'extérieur est sensiblement en butée contre la cloison longitudinale.

11. Un arrangement de sièges d'avion conforme à l'une quelconque des revendications précédentes, comprenant des cloisons inter-sièges entre les différents sièges à l'intérieur de chaque colonne.

12. Un arrangement de sièges d'avion conforme à la revendication 11, dans lequel, au niveau de la cloison longitudinale, les cloisons inter-sièges possèdent des portions intérieures s'étendant sensiblement à angle droit par rapport à la cloison longitudinale.

13. Un arrangement de sièges d'avion conforme à la revendication 12, dans lequel les cloisons inter-sièges possèdent des portions intermédiaires s'étendant sensiblement parallèlement aux axes centraux des deux sièges qu'elles séparent.

14. Un arrangement de sièges d'avion conforme à la revendication 13, dans lequel les cloisons inter-sièges possèdent des portions extérieures qui soit s'étendent sensiblement à angle droit par rapport à la cloison longitudinale, la portion extérieure correspondante s'étendant alors derrière une extrémité d'appuie-tête d'un siège, soit s'étendent selon un angle intermédiaire entre l'angle droit par rapport à la cloison longitudinale et l'axe central du siège, la portion extérieure correspondante s'étendant alors derrière une extrémité de repose-pieds d'un siège.

15. Un arrangement de sièges d'avion conforme à la revendication 13, dans lequel les cloisons inter-sièges possèdent des extensions sur couloir au moins à partir de leurs portions extérieures s'étendant derrière une extrémité d'appuie-tête, afin d'entourer au moins partiellement l'extrémité d'appuie-tête.

16. Un arrangement de sièges d'avion conforme à l'une quelconque des revendications précédentes, comprenant au moins une colonne supplémentaire de sièges séparée par un couloir de la colonne voisine des deux colonnes de sièges :
• les sièges de la colonne supplémentaire possédant des axes centraux respectifs,
• les sièges de la colonne supplémentaire possédant leur axe central en angle par rapport à l'axe longitudinal et
• les sièges de la colonne supplémentaire étant tournés dans des directions opposées selon l'axe longitudinal, l'un étant tourné vers l'axe longitudinal et le suivant étant tourné à l'opposé de l'axe longitudinal.
